# NEUE EUROPÄISCHE PATENTSCHRIFT

(11) **EP 2 688 365 B2**
(45) Veröffentlichungstag und Bekanntmachung des Hinweises auf die Entscheidung über den Einspruch: **08.11.2023**
(45) Hinweis auf die Patenterteilung: 16.03.2016
(21) Anmeldenummer: 13175754.4
(22) Anmeldetag: 09.07.2013
(51) Int. Cl.: H05B 6/06, H05B 6/12

(54) **Kochfeldvorrichtung**
Cooking hob
Dispositif de plaque de cuisson

(30) Priorität: 20.07.2012 ES 201231155
(43) Veröffentlichungstag der Anmeldung: 22.01.2014
(73) Patentinhaber: BSH Hausgeräte GmbH, 81739 München (DE)
(72) Erfinder: Garde Aranda, Ignacio, 50012 Zaragoza (ES); Mairal Serrano, Carlos Vicente, 50015 Zaragoza (ES); Palacios Tomas, Daniel, 50008 Zaragoza (ES); Peinado Adiego, Ramon, 50008 Zaragoza (ES); Rivera Peman, Julio, 50410 Cuarte de Huerva (Zaragoza) (ES); Valeau Martin, David, 50010 Zaragoza (ES)

(56) Entgegenhaltungen:
- EP-A1- 2 416 621
- WO-A1-2008/122495
- FR-A1- 2 758 934
- JP-A- 2010 165 656

## Beschreibung

Die Erfindung geht aus von einer Kochfeldvorrichtung nach dem Oberbegriff des Anspruchs 1.

Es ist bereits eine Kochfeldvorrichtung mit einer Mehrzahl von unter einer Kochfläche angeordneten Induktoren, mit zumindest einer Sensoreinheit zu einer Detektion von ein oder mehreren auf der Kochfläche aufgestellten Kochgeschirrelementen und mit einer Steuereinheit zum Betätigen der Induktoren, wobei die Steuereinheit dazu vorgesehen ist, die von den Kochgeschirrelementen bedeckten Induktoren zumindest zu einer Heizzonenkonfiguration zusammenzufassen zumindest aus WO 2008/122495 A1 bekannt.

Die Aufgabe der Erfindung besteht insbesondere darin, eine gattungsgemäße Vorrichtung mit verbesserten Eigenschaften hinsichtlich Benutzerkomfort, Flexibilität und Produktionskosten bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung mit einer Mehrzahl von unter einer Kochfläche angeordneten Induktoren, mit einem Topferkennungssystem zu einer Detektion von ein oder mehreren auf der Kochfläche aufgestellten Kochgeschirrelementen und mit einer Steuereinheit zum Betätigen der Induktoren, wobei die Steuereinheit dazu vorgesehen ist, die von den Kochgeschirrelementen bedeckten Induktoren zumindest zu einer Heizzonenkonfiguration zusammenzufassen. Unter "einer Mehrzahl von unter einer Kochfläche angeordneten Induktoren" soll insbesondere verstanden werden, dass insbesondere mehr als 4 Induktoren unter der Kochfläche angeordnet sind. Dabei sollen die Induktoren in einer senkrecht zu der Kochfläche stehenden Richtung derart unter der Kochfläche angeordnet sein, dass ein Abstand bezüglich der senkrechten Richtung zwischen der Kochfläche und den Induktoren weniger als 5 cm, vorzugsweise weniger als 2 cm und insbesondere weniger als 1 cm beträgt. Unter einem "Induktor" soll insbesondere eine Heizeinheit verstanden werden, die dazu vorgesehen ist, ein oberhalb der Heizeinheit auf der Kochfläche aufgestelltes Kochgeschirrelement zu erhitzen. Insbesondere ist der Induktor als eine Induktorspule ausgebildet, die mit hochfrequentem Wechselstrom gespeist wird. Unter "vorgesehen" soll insbesondere speziell programmiert, ausgelegt und/oder ausgestattet verstanden werden. Ein "Topferkennungssystem" ist ein System das ein oder mehrere auf der Kochfläche aufgestellte Kochgeschirrelemente erkennen kann. Insbesondere soll das Topferkennungssystem eine Größe, eine Form und/oder eine Position der ein oder mehreren auf der Kochfläche aufgestellten Kochgeschirrelemente erkennen und insbesondere von weiteren auf der Kochfläche aufgestellten Gegenständen, wie beispielsweise Messer, Gabel, Schere oder ähnlichen Gegenständen, unterscheiden. Es ist ebenfalls denkbar, dass das Topferkennungssystem ein Gewicht oder andere charakteristische Merkmale der ein oder mehreren auf der Kochfläche aufgestellten Kochgeschirrelemente erkennen kann. Die Topferkennung kann vorzugsweise über eine induktive Rückkopplung zwischen dem Induktor und einem aufgestellten Kochgeschirrelement nach kurzem Einschalten des Induktors erfolgen. Es sind jedoch auch andere Topferkennungssysteme denkbar, beispielsweise kann ein Sensor zu einer Detektion verwendet werden, beispielsweise ein Berührungssensor. Unter einer "Steuereinheit" soll insbesondere eine elektronische Einheit verstanden werden, die vorzugsweise in einer Steuer- und/oder Regeleinheit der Kochfeldvorrichtung zumindest teilweise integriert ist und die vorzugsweise dazu vorgesehen ist, zumindest die Induktoren zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Unter einer "Heizzonenkonfiguration" soll ein Zusammenschluss von geeigneten, unterhalb von einem auf der Kochfläche aufgestellten und durch das Topferkennungssystem erkannten Kochgeschirrelements befindlichen Induktoren verstanden werden. Dabei sollen die zu der Heizzonenkonfiguration zusammengefassten Induktoren zu einer Beheizung des auf der Kochfläche aufgestellten Kochgeschirrelements, unterhalb welchem die Induktoren angeordnet sind, vorgesehen sein. Die Heizzonenkonfigurationen weisen zumindest eine zusammenhängende Heizzone zu einer Beheizung der aufgestellten Kochgeschirrelemente auf, wobei eine Anzahl an Heizzonen kleiner oder gleich einer Anzahl an auf der Kochfläche aufgestellten Kochaeschirrelementen ist. Für eine der Heizzonenkonfigurationen ist eine Anzahl an Heizzonen kleiner einer Anzahl an auf der Kochfläche aufgestellten Kochgeschirrelementen. Unter einer "Heizzone" ist zumindest ein Induktor und vorzugsweise ein Zusammenschluss mehrerer Induktoren zu verstehen, die hierdurch insbesondere einen zusammenhängenden Flächenbereich der Kochfläche bilden, der zur Erhitzung eines auf dem Flächenbereich aufgestellten Kochgeschirrelements vorgesehen ist. Alle einer Heizzone zugeordneten Induktoren werden von demselben hochfrequenten Wechselstrom versorgt. Unter einem "bedeckten Induktor" soll insbesondere ein Induktor verstanden werden, dessen zu der Kochfläche weisende Oberfläche zu einem gewissen Teil von einem auf der Kochfläche aufgestellten Kochgeschirrelement bedeckt ist. Eine Ermittlung, ob ein Induktor von dem Topferkennungssystem als ein bedeckter Induktor betrachtet wird, hängt von verschiedenen Parametern ab, wie beispielsweise Dimensionen der Induktoren, Dimensionen des Kochgeschirrelements, sowie einem senkrecht zu der Kochfläche stehenden Abstand der Induktoren von den Kochgeschirrelementen.

Es wird vorgeschlagen, dass die Steuereinheit dazu vorgesehen ist, in zumindest einem Betriebszustand zumindest zwei alternativ auswählbare Heizzonenkonfigurationen auszugeben. Insbesondere ist die Steuereinheit dazu vorgesehen, in dem zumindest einen Betriebszustand abhängig von einem in einem Einstellungsmenü einstellbaren Parameter zumindest zwei alternativ auswählbare Heizzonenkonfigurationen auszugeben. Dabei ist der in dem Einstellungsmenü einstellbare Parameter als eine Situation ausgebildet, bei der die zumindest zwei Alternativen angezeigt werden, beispielsweise ist eine solche Situation "bei jedem neu aufgestellten Kochgeschirrelement", "bei jedem erneuten Einschalten der Kochfeldvorrichtung", "wenn das Topferkennungssystem Zweifel an einer Position der Kochgeschirrelemente hat" oder jede einem Fachmann als sinnvoll erscheinende Situation. Unter "zumindest zwei alternativ auswählbaren Heizzonenkonfigurationen" soll insbesondere verstanden werden, dass zumindest zwei sich jeweils in wenigstens einem charakteristischen Merkmal unterscheidende Heizzonenkonfigurationen vorgesehen sein sollen, welche für einen Endnutzer frei auswählbar sind, wobei nach einer Auswahl entweder eine erste der zumindest zwei Heizzonenkonfigurationen oder eine sich von der ersten Heizzonenkonfiguration unterscheidende zweite Heizzonenkonfiguration ausgewählt ist. Beispielsweise kann die Steuereinheit die zumindest zwei alternativ auswählbaren Heizzonenkonfigurationen an eine weitere Einheit ausgeben, welche anschließend zwischen den zumindest zwei alternativ auswählbaren Heizzonenkonfigurationen eine Auswahl trifft. Insbesondere gibt die Steuereinheit die zumindest zwei alternativ auswählbaren Heizzonenkonfigurationen zu einer Auswahl an einen Endnutzer aus. Dadurch, dass ein Endnutzer die Heizzonenkonfigurationen auswählen kann, können Algorithmen zu einem Auswählen der Heizzonenkonfigurationen und damit Produktionskosten eingespart werden. Zudem kann durch eine erfindungsgemäße Ausgestaltung vorzugsweise eine flexible, benutzerfreundliche Kochfeldvorrichtung erreicht werden.

Ferner wird vorgeschlagen, dass die Steuereinheit eine Anzeigeeinheit aufweist, die dazu vorgesehen ist, die von der Steuereinheit ausgegebenen Heizzonenkonfigurationen anzuzeigen. Unter einer "Anzeigeeinheit" soll insbesondere eine Einheit verstanden werden, die zumindest zwei Anzeigezustände aufweist und in zumindest einem Anzeigezustand eine optische und/oder akustische Anzeige vermittelt und vorzugsweise ein für einen Menschen sichtbares und/oder hörbares Signal abgibt. Insbesondere soll unter einer Anzeigeeinheit ein Leuchtmittel, vorzugsweise eine LED, und/oder eine, vorzugsweise hinterleuchtete, Displayeinheit, insbesondere eine Matrixdisplayeinheit, vorzugsweise ein LCD-Display, ein OLED-Display und/oder elektronisches Papier (e-paper, E-Ink), verstanden werden. Vorzugsweise zeigt die Anzeigeeinheit die von der Steuereinheit ausgegebenen Heizzonenkonfigurationen auf der Kochfläche selbst und/oder auf einem getrennt von der Kochfläche ausgebildeten Display an. Durch eine erfindungsgemäße Ausgestaltung kann vorzugsweise ein Benutzerkomfort durch eine übersichtliche Anzeige erhöht werden.

Zudem wird zumindest eine Eingabeeinheit zu einem Auswählen einer der zumindest zwei Heizzonenkonfigurationen vorgeschlagen. Unter einer "Eingabeeinheit" soll insbesondere eine Einheit verstanden werden, über welche ein Endnutzer eine der zumindest zwei alternativ auswählbaren Heizzonenkonfigurationen auswählen kann. Vorzugsweise ist die Eingabeeinheit mit der Steuereinheit verbunden und insbesondere teilweise einstückig mit der Steuereinheit ausgebildet. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind. Die Steuereinheit und die Eingabeeinheit weisen vorzugsweise eine beiden gemeinsame Recheneinheit auf und sind beide zumindest teilweise in der Steuer- und/oder Regeleinheit der Kochfeldvorrichtung integriert. Durch eine erfindungsgemäße Ausgestaltung kann vorzugsweise eine einfache Bedienung der Kochfeldvorrichtung erreicht werden.

Weiterhin wird vorgeschlagen, dass die Steuereinheit dazu vorgesehen ist, in zumindest einem Betriebszustand zumindest eine Heizzonenkonfiguration auszugeben, die zumindest zwei Heizzonen aufweist. Unter "zumindest zwei Heizzonen" sollen insbesondere zwei räumlich voneinander getrennt angeordnete Heizzonen verstanden werden. Dabei soll zwischen den zumindest zwei Heizzonen, welche jeweils aus einem Zusammenschluss von ein oder mehreren Induktoren gebildet sind und vorzugsweise einen zusammenhängenden Flächenbereich der Kochfläche bilden, zumindest ein Induktor, vorzugsweise mehrere Induktoren angeordnet sein, welche weder einer ersten noch einer oder mehreren beliebigen weiteren sich von der ersten Heizzone unterscheidenden Heizzone zugeordnet sind. Durch eine erfindungsgemäße Ausgestaltung kann vorzugsweise eine energiesparende und damit benutzerfreundliche Kochfeldvorrichtung erreicht werden.

Ferner wird zumindest eine Einstelleinheit vorgeschlagen, die in zumindest einem Betriebszustand zu einem Einstellen einer Heizleistung von zumindest einer der zumindest zwei Heizzonenkonfigurationen vorgesehen ist. Unter einer "Einstelleinheit" soll insbesondere eine Einheit verstanden werden, über welche ein Endnutzer zumindest einen Parameter von zumindest einer der zumindest zwei Heizzonenkonfigurationen einstellen kann. Dabei ist es denkbar, dass eine Einstellung des zumindest einen Parameters für alle der zumindest zwei Heizzonenkonfigurationen simultan erfolgt, so dass allen Heizzonenkonfigurationen derselbe Parameter zugeordnet wird. Insbesondere soll die Einstelleinheit dazu vorgesehen sein, die Einstellung des zumindest einen Parameters für jede der zumindest zwei Heizzonenkonfigurationen separat einzustellen, so dass für jede der zumindest zwei Heizzonenkonfigurationen ein eigener Parameter unabhängig von einem Parameter weiterer Heizzonenkonfigurationen einstellbar ist. Insbesondere soll der zumindest eine Parameter eine Heizleistung sein. Vorzugsweise ist die Einstelleinheit mit der Steuereinheit verbunden und insbesondere teilweise einstückig mit der Steuereinheit ausgebildet. Die Einstelleinheit und die Steuereinheit weisen vorzugsweise eine beiden gemeinsame Recheneinheit auf und sind beide zumindest teilweise in der Steuer- und/oder Regeleinheit der Kochfeldvorrichtung integriert. Durch eine erfindungsgemäße Ausgestaltung kann vorzugsweise eine flexible Einstellung einer Heizleistung und damit eine benutzerfreundliche Kochfeldvorrichtung erreicht werden.

Zudem wird vorgeschlagen, dass die zumindest eine Einstelleinheit in zumindest einem Betriebszustand zu einem separaten Einstellen der Heizleistung der zumindest zwei Heizzonen vorgesehen ist. Unter einem "separaten Einstellen der Heizleistung der zumindest zwei Heizzonen" soll insbesondere verstanden werden, dass eine Heizleistung einer ersten Heizzone der zumindest zwei Heizzonen getrennt, insbesondere unabhängig, von einer Heizleistung einer zweiten, sich von der ersten Heizzone unterscheidenden Heizzone der zumindest zwei Heizzonen einstellbar ist. Insbesondere kann für die erste Heizzone eine Heizleistung eingestellt werden, welche von einer für die zweite Heizzone eingestellten Heizleistung abweicht. Durch eine erfindungsgemäße Ausgestaltung kann vorzugsweise eine flexible Einstellung einer Heizleistung und damit eine benutzerfreundliche Kochfeldvorrichtung erreicht werden.

Weiterhin wird vorgeschlagen, dass die Steuereinheit dazu vorgesehen ist, in zumindest einem Betriebszustand die zumindest zwei Heizzonenkonfigurationen zu einer simultanen Anzeige anzuzeigen. Unter einer "simultanen Anzeige" soll insbesondere verstanden werden, dass die zumindest zwei Heizzonenkonfigurationen zeitgleich auf einer zu einer Anzeige vorgesehenen Einheit angezeigt werden. Dabei ist denkbar, dass die zur Anzeige vorgesehene Einheit die zumindest zwei Heizzonenkonfigurationen simultan auf zwei räumlich getrennt angeordneten zu der Einheit gehörenden Anzeigeelementen anzeigt. Insbesondere soll unter einer simultanen Anzeige verstanden werden, dass die zumindest zwei Heizzonenkonfigurationen zeitgleich auf einem einzigen zu der Einheit gehörenden Anzeigeelement angezeigt werden und somit von einem Endnutzer zeitgleich gesehen werden können. Vorzugsweise ist die zu einer Anzeige vorgesehene Einheit einstückig mit der Anzeigeeinheit ausgebildet. Durch eine erfindungsgemäße Ausgestaltung kann vorzugsweise eine übersichtliche Anzeige der zumindest zwei Heizzonenkonfigurationen und damit eine benutzerfreundliche Kochfeldvorrichtung erreicht werden.

Ferner wird vorgeschlagen, dass die Steuereinheit dazu vorgesehen ist, in zumindest einem Betriebszustand die zumindest zwei Heizzonenkonfigurationen zu einer getrennten Anzeige auszugeben. Unter einer "getrennten Anzeige" soll insbesondere verstanden werden, dass ein zu einer Anzeige vorgesehenes Element zu einem ersten Zeitpunkt lediglich eine erste der zumindest zwei Heizzonenkonfigurationen anzeigt und zu einem anderen sich von dem ersten Zeitpunkt unterscheidenden zweiten Zeitpunkt eine zweite sich von der ersten der zumindest zwei Heizzonenkonfigurationen unterscheidende Heizzonenkonfiguration anzeigt. Insbesondere soll unter einer getrennten Anzeige verstanden werden, dass ein zeitgleiches, simultanes Anzeigen der zumindest zwei Heizzonenkonfigurationen vermieden wird. Durch eine erfindungsgemäße Ausgestaltung kann vorzugsweise eine angezeigte Heizzonenkonfiguration besonders groß angezeigt werden.

Zudem wird zumindest eine Umschalteinheit vorgeschlagen, die dazu vorgesehen ist, einen Wechsel zwischen einer jeweiligen Anzeige der zumindest zwei Heizzonenkonfigurationen zu ermöglichen. Vorzugsweise ist die Umschalteinheit mit der Steuereinheit verbunden und insbesondere teilweise einstückig mit der Steuereinheit ausgebildet. Die Umschalteinheit und die Steuereinheit weisen vorzugsweise eine beiden gemeinsame Recheneinheit auf und sind beide zumindest teilweise in der Steuer- und/oder Regeleinheit der Kochfeldvorrichtung integriert. Durch eine erfindungsgemäße Ausgestaltung kann vorzugsweise eine benutzerfreundliche Bedienung der Kochfeldvorrichtung erreicht werden.

Weiterhin wird vorgeschlagen, dass die zumindest eine Anzeigeeinheit als ein Display ausgebildet ist. Durch eine erfindungsgemäße Ausgestaltung kann vorzugsweise eine benutzerfreundliche Bedienung der Kochfeldvorrichtung erreicht werden.

Ferner wird vorgeschlagen, dass das Display als Touchscreen ausgebildet ist. Durch eine erfindungsgemäße Ausgestaltung kann vorzugsweise eine benutzerfreundliche Bedienung der Kochfeldvorrichtung erreicht werden.

Zudem wird vorgeschlagen, dass die Induktoren eine Kochfeldmatrix ausbilden. Unter einer "Kochfeldmatrix" soll insbesondere eine Anordnung von Induktoren verstanden werden bei der die Induktoren in einem regelmäßigen Raster unter der Kochfläche angeordnet sind, und ein mittels der Heizeinheiten heizbarer Bereich der Kochfläche vorzugsweise wenigstens 60%, insbesondere zumindest 70%, vorteilhaft zumindest 80% und besonders vorteilhaft wenigstens 90% einer Gesamtfläche der Kochfläche umfasst. Vorteilhaft umfasst die Kochfeldmatrix zumindest 5, besonders vorteilhaft zumindest 7 unter der Kochfläche in einem regelmäßigen Raster angeordnete Induktoren, wobei insbesondere mehr als 3 der Induktoren in einer Reihe und insbesondere mehr als 3 der Induktoren in einer Spalte angeordnet sind. Insbesondere umfasst die Kochfeldmatrix mehr als 10 unter der Kochfläche in einem regelmäßigen Raster angeordnete Induktoren. Durch eine erfindungsgemäße Ausgestaltung kann vorzugsweise eine symmetrische Anordnung der Induktoren erreicht werden, wodurch die Kochfläche symmetrisch beheizt und damit ein benutzerfreundliches Kocherlebnis erreicht wird.

In einer weiteren Ausgestaltung der Erfindung wird ein Kochfeld mit einer erfindungsgemäßen Kochfeldvorrichtung vorgeschlagen.

### Komplett gestrichen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a: eine erfindungsgemäße Kochfeldvorrichtung,
- Fig. 1b: eine alternative Ausgestaltung der Kochfeldvorrichtung aus Figur 1,
- Fig. 2: ein Anzeigeelement der Kochfeldvorrichtung aus Figur 1 und
- Fig. 3a-d: verschiedene Heizkonfigurationen bei einer vorgegebenen Stellung von vier Kochgeschirrelementen.

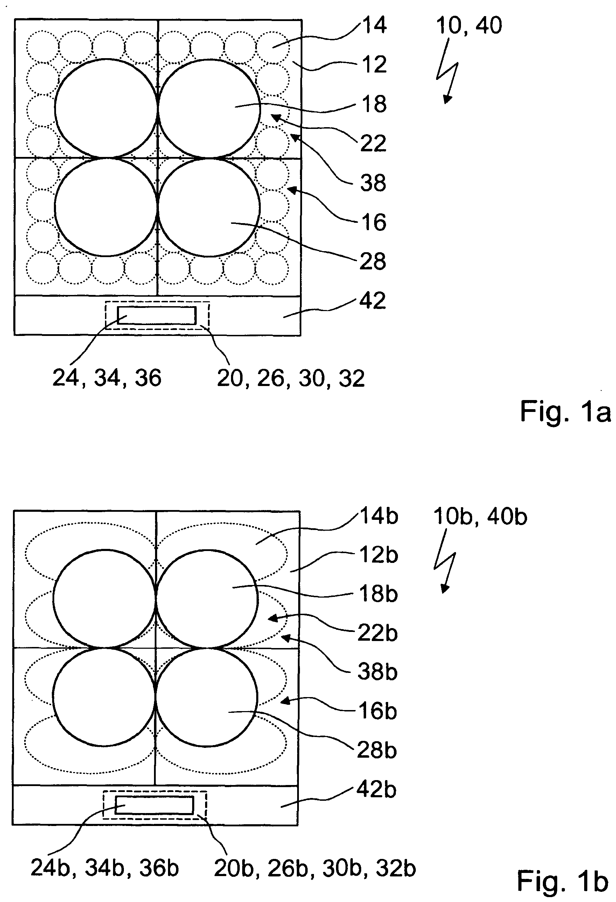

Fig. 1a zeigt eine erfindungsgemäße Kochfeldvorrichtung 10 mit einer Mehrzahl von unter einer Kochfläche 12 angeordneten Induktoren 14, mit einem Topferkennungssystem 16 zu einer Detektion von ein oder mehreren auf der Kochfläche 12 aufgestellten Kochgeschirrelementen 18 und mit einer Steuereinheit 20 zum Betätigen der Induktoren 14, wobei die Steuereinheit 20 dazu vorgesehen ist, die von den Kochgeschirrelementen 18 bedeckten Induktoren 14 zumindest zu einer Heizzonenkonfiguration 22 zusammenzufassen. Ferner zeigt Fig. 1a ein erfindungsgemäßes Kochfeld 40 mit der erfindungsgemäßen Kochfeldvorrichtung 10. Im gezeigten Ausführungsbeispiel sind vier Kochgeschirrelemente 18 auf der Kochfläche 12 aufgestellt. Unterhalb der Kochfläche 12 ist beispielhaft eine 8x8 Matrix von insgesamt 64 Induktoren 14 gezeigt, wobei lediglich die nicht von einem Kochgeschirrelement 18 bedeckten Induktoren 14 gezeigt sind. Die Induktoren 14 sind gestrichelt dargestellt, um zu zeigen, dass diese unterhalb der Kochfläche 12 angeordnet sind. Somit ist in Fig. 1a gezeigt, dass die Induktoren 14 eine Kochfeldmatrix 38 ausbilden.

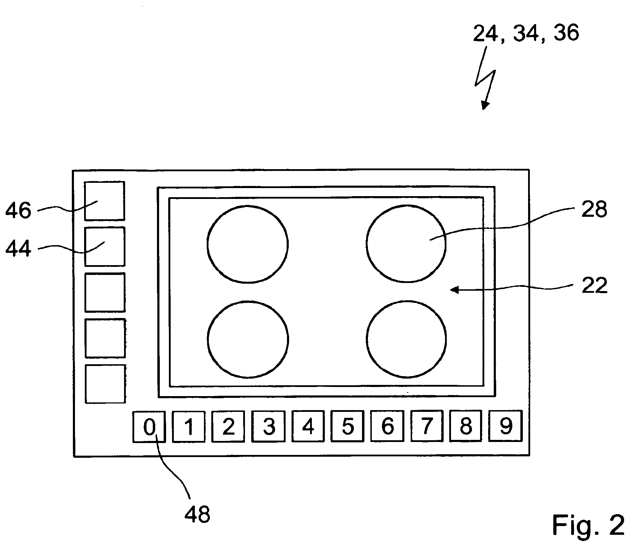

Ebenfalls unterhalb der Kochfläche 12 angeordnet und somit gestrichelt dargestellt ist die Steuereinheit 20. Die Steuereinheit 20 weist eine Anzeigeeinheit 24 auf, die dazu vorgesehen ist, die von der Steuereinheit 20 ausgegebenen Heizzonenkonfigurationen 22 anzuzeigen. Die Anzeigeeinheit 24 ist im gezeigten Ausführungsbeispiel auf einer Bedienvorrichtung 42 angeordnet, welche an einen unteren Rand der Kochfläche 12 angrenzt. Dabei ist die Anzeigeeinheit 24 als Display 34 ausgebildet, wobei das Display 34 als Touchscreen 36 ausgebildet ist. Eine detailliertere Beschreibung der Anzeigeneinheit erfolgt in der Beschreibung zu der Fig. 2.

Die Steuereinheit 20 ist dazu vorgesehen, in zumindest einem Betriebszustand zumindest zwei alternativ auswählbare Heizzonenkonfigurationen 22 auszugeben, wobei dieser zumindest eine Betriebszustand immer dann auftritt, wenn mehr als ein Kochgeschirrelement 18 auf der Kochfläche 12 aufgestellt ist. Zudem ist die Steuereinheit 20 dazu vorgesehen, in zumindest einem Betriebszustand zumindest eine Heizzonenkonfiguration 22 auszugeben, die zumindest zwei Heizzonen 28 aufweist.

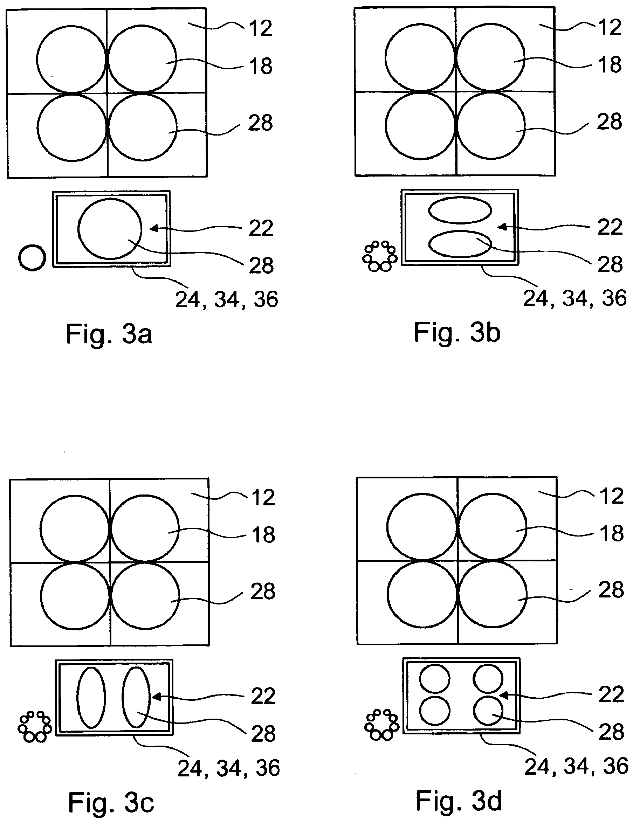

Die Fig. 3a-d zeigen jeweils eine von der Steuereinheit 20 ausgegebene und von der Anzeigeeinheit 24 angezeigte Heizzonenkonfiguration 22. Dabei ist als Beispiel ein Aufstellen von vier Kochgeschirrelementen 18 auf der Kochfläche 12 gezeigt. In diesem Fall von vier auf der Kochfläche 12 aufgestellten Kochgeschirrelementen 18 hat die Steuereinheit 20 vier mögliche Heizzonenkonfigurationen 22 als wahrscheinlich ermittelt, basierend auf einer Einstellung eines einstellbaren Parameters in einem Einstellmenü der Steuereinheit 20 (nicht dargestellt). In Fig. 3a ist für die vier Kochgeschirrelemente 18 eine Heizzonenkonfiguration 22 mit einer Heizzone 28 vorgeschlagen. Die Fig. 3b und 3c zeigen jeweils eine Heizzonenkonfiguration 22 mit jeweils zwei Heizzonen 28, welche jeweils zwei Kochgeschirrelemente 18 beheizen, wobei ein Unterschied zwischen Fig. 3b und Fig. 3c in einer Ausrichtung der Heizzonen 28 liegt, so dass jeweils andere der vier Kochgeschirrelemente 18 zusammen beheizt werden. Fig. 3d zeigt eine Heizzonenkonfiguration 22 mit vier Heizzonen 28 und somit für jedes Kochgeschirrelement 18 eine Heizzone 28.

Eine Ausgabe der Heizzonenkonfigurationen 22 durch die Steuereinheit 20 kann auf zwei verschiedene Weisen erfolgen. Diese beiden Weisen unterscheiden sich insbesondere in einem Fall, wenn mehr als ein Kochgeschirrelement 18 auf der Kochfläche 12 aufgestellt ist, wie dies in den Fig. 3a-d gezeigt ist. Die Steuereinheit 20 ist dazu vorgesehen, in zumindest einem Betriebszustand die zumindest zwei Heizzonenkonfigurationen 22 zu einer simultanen Anzeige anzuzeigen. Bezüglich des Beispiels mit vier aufgestellten Kochgeschirrelementen 18 bedeutet dies ein gleichzeitiges Anzeigen aller von der Steuereinheit 20 ermittelter und ausgegebener möglicher Heizzonenkonfigurationen 22, welche in den Fig. 3a-d dargestellt sind, auf der Anzeigeeinheit 24.

Zudem ist die Steuereinheit 20 dazu vorgesehen, in zumindest einem Betriebszustand die zumindest zwei Heizzonenkonfigurationen 22 zu einer getrennten Anzeige auszugeben. Somit erscheint jeweils lediglich eine der von der Steuereinheit 20 ermittelten und ausgegebenen möglichen Heizzonenkonfigurationen 22 auf der Anzeigeeinheit 24. Dies ist in den Fig. 3a-d gezeigt, wobei jeweils eine der Fig. 3a-d auf der Anzeigeeinheit 24 angezeigt wird. Soll eine andere der Heizzonenkonfigurationen 22 auf der Anzeigeeinheit 24 angezeigt werden, so muss dies der Steuereinheit 20 mitgeteilt werden. Dazu weist die Kochfeldvorrichtung 10 eine Umschalteinheit 32 auf, die dazu vorgesehen ist, einen Wechsel zwischen einer jeweiligen Anzeige der zumindest zwei Heizzonenkonfigurationen 22 zu ermöglichen. Die Umschalteinheit 32 ist im gezeigten Ausführungsbeispiel einstückig mit der Steuereinheit 20 ausgebildet. Durch Betätigung eines an der Anzeigeeinheit 24 angeordneten Umschaltelements 44 kann ein Wechsel zwischen der jeweiligen Anzeige der zumindest zwei Heizzonenkonfigurationen 22 ermöglicht werden (vgl. Fig. 2).

Die Kochfeldvorrichtung 10 weist ferner eine Eingabeeinheit 26 zu einem Auswählen einer der zumindest zwei Heizzonenkonfigurationen 22 auf. Die Eingabeeinheit 26 ist im gezeigten Ausführungsbeispiel einstückig mit der Steuereinheit 20 ausgebildet. Durch Betätigung eines an der Anzeigeeinheit 24 angeordneten Eingabeelements 46 kann eine der zumindest zwei Heizzonenkonfigurationen 22 ausgewählt werden (vgl. Fig. 2). Die ausgewählte Heizzonenkonfiguration 22 wird anschließend zu einer Beheizung der auf der Kochfläche 12 aufgestellten Kochgeschirrelemente 18 verwendet.

Zudem weist die Kochfeldvorrichtung 10 eine Einstelleinheit 30 auf, die in zumindest einem Betriebszustand zu einem Einstellen einer Heizleistung von zumindest einer der zumindest zwei Heizzonenkonfigurationen 22 vorgesehen ist. Die Einstelleinheit 30 ist im gezeigten Ausführungsbeispiel teilweise einstückig mit der Steuereinheit 20 ausgebildet. In diesem Betriebszustand kann über die Einstelleinheit 30 eine Einstellung einer Heizleistung von allen eine Heizzonenkonfiguration 22 bildenden Heizzonen 28 gemeinsam vorgenommen werden. Dies kann durch Betätigung von mehreren an der Anzeigeeinheit 24 angeordneten Einstellelementen 48 erreicht werden, welche jeweils mit einer arabischen Zahl beschriftet sind (vgl. Fig. 2). Dabei stehen die arabischen Zahlen für eine Intensität der Heizleistung, wobei eine geringe Intensität der Heizleistung einer niederen arabischen Zahl, beispielsweise 1 oder 2, entspricht, eine hohe Intensität entsprechend einer hohen arabischen Zahl, beispielsweise 8 oder 9. Bei Betätigung des Einstellelements 48 mit der Aufschrift 0 kann eine Heizleistung ausgestellt werden.

Zudem ist die Einstelleinheit 30 in zumindest einem Betriebszustand zu einem separaten Einstellen der Heizleistung der zumindest zwei Heizzonen 28 vorgesehen. Bezogen auf das obige Beispiel mit vier auf der Kochfläche 12 aufgestellten Kochgeschirrelementen 18 kann somit in der in Fig. 3d dargestellten Heizzonenkonfiguration 22 für jede der vier Heizzonen 28 die Heizleistung unabhängig von einer Heizleistung der anderen Heizzonen 28 eingestellt werden.

Fig. 2 zeigt die Anzeigeeinheit 24. An einer linken Seite der Anzeigeeinheit 24 sind das Umschaltelement 44 sowie das Eingabeelement 46 angeordnet. Ferner sind an einem unteren Rand der Anzeigeeinheit 24 die Einstellelemente 48 angeordnet, wobei aus Gründen der Übersichtlichkeit lediglich eines der Einstellelemente 48 mit einer Bezugszahl versehen ist. Mittig auf der Anzeigeeinheit 24 ist beispielhaft die in der Fig. 3d dargestellte Heizzonenkonfiguration 22 dargestellt.

Die Kochfeldvorrichtung 10 kann mit einem Verfahren zu einem Betrieb der erfindungsgemäßen Kochfeldvorrichtung 10 betrieben werden. Dazu wird auf der Kochfläche 12 eine gewisse, für den Kochvorgang benötigte Anzahl an Kochgeschirrelementen 18 aufgestellt. Nach einer Auswahl der gewünschten, von der Steuereinheit 20 ausgegebenen und auf der Anzeigeeinheit 24 angezeigten Heizzonenkonfiguration 22 durch Betätigung des Eingabeelements 46, kann eine Heizleistung der ausgewählten Heizzonenkonfiguration 22 eingegeben werden. Alternativ kann, falls die ausgewählte Heizzonenkonfiguration 22 mehrere Heizzonen 28 aufweist, für jede der Heizzonen 28 eine Heizleistung unabhängig von einer Heizleistung der anderen Heizzonen 28 eingestellt werden. Sodann kann mit einem Kochvorgang begonnen werden. Zu einem Ausschalten einer der Heizzonen 28 oder der gesamten Heizzonenkonfiguration 22 wird die entsprechende Heizleistung durch Betätigen des Einstellelements 48 mit der Aufschrift 0 auf den Wert Null gestellt.

In der Fig. 1b ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des anderen Ausführungsbeispiels verwiesen werden kann. Zur Unterscheidung der Ausführungsbeispiele ist der Buchstabe b in den Bezugszeichen des zweiten Ausführungsbeispiels angefügt. Bezüglich gleich bezeichneter Bauteile, insbesondere in Bezug auf Bauteile mit gleichen Bezugszeichen, wird grundsätzlich auch auf die Zeichnungen und/oder die Beschreibung des Ausführungsbeispiels der Fig. 1a verwiesen.

Das in der Fig. 1b gezeigte Ausführungsbeispiel unterscheidet sich von dem in der Fig. 1 a gezeigten Ausführungsbeispiel ausschließlich durch eine Anzahl an unter der Kochfläche 12, 12b angeordneten Induktoren 14, 14b. Im Gegensatz zu den in dem Ausführungsbeispiel der Fig. 1a gezeigten und in einer 8x8 Matrix angeordneten Induktoren 14 sind die Induktoren 14b des Ausführungsbeispiels der Fig. 1b in einer 4x2 Matrix angeordnet. Dabei sind jeweils vier Induktoren 14b in einer Reihe, insbesondere vier Induktoren 14b in einer Spalte angeordnet. Ferner sind die Induktoren 14b nicht wie im Ausführungsbeispiel der Fig. 1a als Kreise ausgebildet, sondern weisen eine ovale Form auf. Dies sind sämtliche Unterschiede zwischen den beiden Ausführungsbeispielen, alle anderen Eigenschaften sind identisch. Insbesondere sind die zu den Fig. 2 sowie 3a-d vorgenommenen Beschreibungen ebenfalls für das Ausführungsbeispiel der Fig. 1 b gültig.

### Bezugszeichen

- 10: Kochfeldvorrichtung
- 12: Kochfläche
- 14: Induktor
- 16: Topferkennungssystem
- 18: Kochgeschirrelement
- 20: Steuereinheit
- 22: Heizzonenkonfiguration
- 24: Anzeigeeinheit
- 26: Eingabeeinheit
- 28: Heizzone
- 30: Einstelleinheit
- 32: Umschalteinheit
- 34: Display
- 36: Touchscreen
- 38: Kochfeldmatrix
- 40: Kochfeld
- 42: Bedienvorrichtung
- 44: Umschaltelement
- 46: Eingabeelement
- 48: Einstellelement

## Patentansprüche

1. Kochfeldvorrichtung mit einer Mehrzahl von unter einer Kochfläche (12, 12b) angeordneten Induktoren (14, 14b), mit einem Topferkennungssystem (16, 16b) zu einer Detektion von ein oder mehreren auf der Kochfläche (12, 12b) aufgestellten Kochgeschirrelementen (18, 18b) und mit einer Steuereinheit (20, 20b) zum Betätigen der Induktoren (14, 14b), wobei die Steuereinheit (20) dazu vorgesehen ist, die von den Kochgeschirrelementen (18, 18b) bedeckten Induktoren (14, 14b) zumindest zu einer Heizzonenkonfiguration (22, 22b) zusammenzufassen, wobei die zu der Heizzonenkonfiguration (22, 22b) zusammengefassten Induktoren (14, 14b) zu einer Beheizung des auf der Kochfläche (12, 12b) aufgestellten Kochaeschirrelements (18, 18b) oder der auf der Kochfläche (12, 12b) aufgestellten Kochaeschirrelemente (18, 18b), unterhalb welchem oder welchen die Induktoren (14, 14b) angeordnet sind, vorgesehen sind, **dadurch gekennzeichnet, dass** die Steuereinheit (20) dazu vorgesehen ist, in zumindest einem Betriebszustand mit mehreren aufgestellten Kochgeschirrelementen (18, 18b) zumindest zwei alternativ auswählbare Heizzonenkonfigurationen (22, 22b) auszugeben, wobei die Heizzonenkonfigurationen (22, 22b) zumindest eine Heizzone zu einer Beheizung der aufgestellten Kochgeschirrelement (18, 18b) aufweisen und eine Anzahl an Heizzonen kleiner oder gleich einer Anzahl an auf der Kochfläche (12, 12b) aufgestellten Kochgeschirrelementen (18, 18b) ist, wobei für eine der Heizzonenkonfigurationen (22, 22b) eine Anzahl an Heizzonen kleiner einer Anzahl an auf der Kochfläche (12, 12b) aufaestellten Kochgeschirrelementen (18, 18b) ist, wobei alle einer Heizzone zugeordneten Induktoren (14, 14b) von demselben hochfreguenten Wechselstrom versorgt werden.

2. Kochfeldvorrichtung nach Anspruch 1, **dadurch gekennzeichnet, dass** die Steuereinheit (20, 20b) eine Anzeigeeinheit (24, 24b) aufweist, die dazu vorgesehen ist, die von der Steuereinheit (20, 20b) ausgegebenen Heizzonenkonfigurationen (22, 22b) anzuzeigen.

3. Kochfeldvorrichtung nach einem der vorhergehenden Ansprüche, **gekennzeichnet durch** zumindest eine Eingabeeinheit (26, 26b) zu einem Auswählen einer der zumindest zwei Heizzonenkonfigurationen (22, 22b).

4. Kochfeldvorrichtung nach einem der vorhergehenden Ansprüche, **dadurch gekennzeichnet, dass** die Steuereinheit (20, 20b) dazu vorgesehen ist, in zumindest einem Betriebszustand zumindest eine Heizzonenkonfiguration (22, 22b) auszugeben, die zumindest zwei Heizzonen (28, 28b) aufweist.

5. Kochfeldvorrichtung nach einem der vorhergehenden Ansprüche, **gekennzeichnet durch** zumindest eine Einstelleinheit (30, 30b), die in zumindest einem Betriebszustand zu einem Einstellen einer Heizleistung von zumindest einer der zumindest zwei Heizzonenkonfigurationen (22, 22b) vorgesehen ist.

6. Kochfeldvorrichtung nach Anspruch 5, **dadurch gekennzeichnet, dass** die zumindest eine Einstelleinheit (30, 30b) in zumindest einem Betriebszustand zu einem separaten Einstellen der Heizleistung der zumindest zwei Heizzonen (28, 28b) vorgesehen ist.

7. Kochfeldvorrichtung nach einem der vorhergehenden Ansprüche, **dadurch gekennzeichnet, dass** die Steuereinheit (20, 20b) dazu vorgesehen ist, in zumindest einem Betriebszustand die zumindest zwei Heizzonenkonfigurationen (22, 22b) zu einer simultanen Anzeige anzuzeigen.

8. Kochfeldvorrichtung nach einem der vorhergehenden Ansprüche, **dadurch gekennzeichnet, dass** die Steuereinheit (20, 20b) dazu vorgesehen ist, in zumindest einem Betriebszustand die zumindest zwei Heizzonenkonfigurationen (22, 22b) zu einer getrennten Anzeige auszugeben.

9. Kochfeldvorrichtung nach Anspruch 8, **gekennzeichnet durch** zumindest eine Umschalteinheit (32, 32b), die dazu vorgesehen ist, einen Wechsel zwischen einer jeweiligen Anzeige der zumindest zwei Heizzonenkonfigurationen (22, 22b) zu ermöglichen.

10. Kochfeldvorrichtung zumindest nach Anspruch 2, **dadurch gekennzeichnet, dass** die zumindest eine Anzeigeeinheit (24, 24b) als ein Display (34, 34b) ausgebildet ist.

11. Kochfeldvorrichtung nach Anspruch 10, **dadurch gekennzeichnet, dass** das Display (34, 34b) als Touchscreen (36, 36b) ausgebildet ist.

12. Kochfeldvorrichtung nach einem der vorhergehenden Ansprüche, **dadurch gekennzeichnet, dass** die Induktoren (14, 14b) eine Kochfeldmatrix (38, 38b) ausbilden.

13. Kochfeld mit einer Kochfeldvorrichtung (10, 10b) nach einem der vorhergehenden Ansprüche.

## Claims

1. Cooking hob having a plurality of inductors (14, 14b) arranged below a cooking zone (12, 12b), having a pan detection system (16, 16b) for detecting one or a number of cookware elements (18, 18b) positioned on the cooking zone (12, 12b) and having a control unit (20, 20b) for actuating the inductors (14, 14b), wherein the control unit (20) is provided to combine the inductors (14, 14b) covered by the cookware elements (18, 18b) to form at least one heating zone configuration (22, 22b), wherein the inductors (14, 14b) combined to form the heating zone configuration (22, 22b) are provided to heat the cookware elements (18, 18b) positioned on the cooking zone (12, 12b) or the cookware elements (18, 18b) positioned on the cooking zone (12, 12b), below which the inductors (14, 14b) are arranged, **characterised in that** the control unit (20) is provided to output at least two alternatively selectable heating zone configurations (22, 22b) in at least one operating state with a number of positioned cookware elements (18, 18b), wherein the heating zone configurations (22, 22b) have at least one heating zone for heating the positioned cookware element (18, 18b) and a number of heating zones is less than or equal to a number of cookware elements (18, 18b) positioned on the cooking zone (12, 12b), wherein for one of the heating zone configurations (22, 22b), a number of heating zones is less than a number of cookware elements (18, 18b) positioned on the cooking zone (12, 12b), wherein all inductors (14, 14b) assigned to a heating zone are supplied by the same high-frequency alternating current.

2. Cooking hob according to claim 1,
**characterised in that** the control unit (20, 20b) has a display unit (24, 24b) which is provided to display heating zone configurations (22, 22b) output by the control unit (20, 20b).

3. Cooking hob according to one of the preceding claims,
**characterised by** at least one input unit (26, 26b) for selecting one of the at least two heating zone configurations (22, 22b).

4. Cooking hob according to one of the preceding claims,
**characterised in that** the control unit (20, 20b) is provided to output at least one heating zone configuration (22, 22b) having at least two heating zones (28, 28b) in at least one operating state.

5. Cooking hob according to one of the preceding claims,
**characterised by** at least one setting unit (30, 30b), which is provided in at least one operating state to set a heat output of at least one of the at least two heating zone configurations (22, 22b).

6. Cooking hob according to claim 5,
**characterised in that** the at least one setting unit (30, 30b) is provided in at least one operating state to separately set the heat output of the at least two heating zones (28, 28b).

7. Cooking hob according to one of the preceding claims,
**characterised in that** the control unit (20, 20b) is provided to display the at least two heating zone configurations (22, 22b) on a simultaneous display in at least one operating state.

8. Cooking hob according to one of the preceding claims,
**characterised in that** the control unit (20, 20b) is provided to output the at least two heating zone configurations (22, 22b) on a separate display in at least one operating state.

9. Cooking hob according to claim 8,
**characterised by** at least one switchover unit (32, 32b) which is provided to enable a changeover between a respective display of the at least two heating zone configurations (22, 22b).

10. Cooking hob at least according to claim 2,
**characterised in that** the at least one display unit (24, 24b) is embodied as a display (34, 34b).

11. Cooking hob according to claim 10,
**characterised in that** the display (34, 34b) is embodied as a touchscreen (36, 36b).

12. Cooking hob according to one of the preceding claims,
**characterised in that** the inductors (14, 14b) embody a hob matrix (38, 38b).

13. Hob with a cooking hob (10, 10b) according to one of the preceding claims.

## Revendications

1. Dispositif de table de cuisson comportant une pluralité d'inducteurs (14, 14b) disposés au-dessous d'un plan de cuisson (12, 12b), un système d'identification de récipient (16, 16b) pour une détection d'un ou de plusieurs récipients ménagers de cuisson (18, 18b) installés sur le plan de cuisson (12, 12b) et une unité de commande (20, 20b) pour l'actionnement des inducteurs (14, 14b), l'unité de commande (20) étant prévue pour regrouper les inducteurs (14, 14b) recouverts par les récipients ménagers de cuisson (18, 18b) en au moins une configuration de zones de chauffage (22, 22b), les inducteurs (14, 14b) regroupés en la configuration de zones de chauffage (22, 22b) étant prévus pour un chauffage du récipient ménager de cuisson (18, 18b) installé sur le plan de cuisson (12, 12b) ou des récipients ménagers de cuisson (18, 18b) installés sur le plan de cuisson (12, 12b), au-dessous duquel ou desquels les inducteurs (14, 14b) sont disposés, **caractérisé en ce que** l'unité de commande (20) est prévue pour proposer, dans au moins un état de fonctionnement avec plusieurs récipients ménagers de cuisson (18, 18b) installés, au moins deux configurations de zones de chauffage (22, 22b) pouvant être sélectionnées en alternance, les configurations de zones de chauffage (22, 22b) comprenant au moins une zone de chauffage pour un chauffage des récipients ménagers de cuisson (18, 18b) installés et un nombre de zones de chauffage étant inférieur ou égal à un nombre de récipients ménagers de cuisson (18, 18b) installés sur le plan de cuisson (12, 12b), un nombre de zones de chauffage étant inférieur à un nombre de récipients ménagers de cuisson (18, 18b) installés sur le plan de cuisson (12, 12b) pour l'une des configurations de zones de chauffage (22, 22b), tous les inducteurs (14, 14b) associés à une zone de chauffage étant alimentés par le même courant alternatif à haute fréquence.

2. Dispositif de table de cuisson selon la revendication 1, **caractérisé en ce que** l'unité de commande (20, 20b) comprend une unité d'affichage (24, 24b) qui est prévue pour afficher les configurations de zones de chauffage (22, 22b) proposées par l'unité de commande (20, 20b).

3. Dispositif de table de cuisson selon l'une des revendications précédentes, **caractérisé par** au moins une unité d'entrée (26, 26b) pour une sélection de l'une desdites au moins deux configurations de zones de chauffage (22, 22b).

4. Dispositif de table de cuisson selon l'une des revendications précédentes, **caractérisé en ce que** l'unité de commande (20, 20b) est prévue pour proposer, dans au moins un état de fonctionnement, au moins une configuration de zones de chauffage (22, 22b) qui comprend au moins deux zones de chauffage (28, 28b).

5. Dispositif de table de cuisson selon l'une des revendications précédentes, **caractérisé par** au moins une unité de réglage (30, 30b) qui est prévue dans au moins un état de fonctionnement pour un réglage d'une intensité de chauffage d'au moins l'une desdites au moins deux configurations de zones de chauffage (22, 22b).

6. Dispositif de table de cuisson selon la revendication 5, **caractérisé en ce que** ladite au moins une unité de réglage (30, 30b) est prévue dans au moins un état de fonctionnement pour un réglage séparé de l'intensité de chauffage desdites au moins deux zones de chauffage (28, 28b).

7. Dispositif de table de cuisson selon l'une des revendications précédentes, **caractérisé en ce que** l'unité de commande (20, 20b) est prévue pour afficher par un affichage simultané, dans au moins un état de fonctionnement, lesdites au moins deux configurations de zones de chauffage (22, 22b).

8. Dispositif de table de cuisson selon l'une des revendications précédentes, **caractérisé en ce que** l'unité de commande (20, 20b) est prévue pour proposer par un affichage séparé, dans au moins un état de fonctionnement, lesdites au moins deux configurations de zones de chauffage (22, 22b).

9. Dispositif de table de cuisson selon la revendication 8, **caractérisé par** au moins une unité de commutation (32, 32b) qui est prévue pour permettre une permutation entre les affichages respectifs desdites au moins deux configurations de zones de chauffage (22, 22b).

10. Dispositif de table de cuisson selon au moins la revendication 2, **caractérisé en ce que** ladite au moins une unité d'affichage (24, 24b) se présente sous la forme d'un afficheur (34, 34b).

11. Dispositif de table de cuisson selon la revendication 10, **caractérisé en ce que** l'afficheur (34, 34b) se présente sous la forme d'un écran tactile (36, 36b).

12. Dispositif de table de cuisson selon l'une des revendications précédentes, **caractérisé en ce que** les inducteurs (14, 14b) constituent une matrice de table de cuisson (38, 38b).

13. Table de cuisson comportant un dispositif de table de cuisson (10, 10b) selon l'une des revendications précédentes.
